# EUROPÄISCHE PATENTSCHRIFT

(11) **EP 1 955 027 B1**
(45) Veröffentlichungstag und Bekanntmachung des Hinweises auf die Patenterteilung: **10.10.2018**
(21) Anmeldenummer: 06829204.4
(22) Anmeldetag: 30.11.2006
(51) Int. Cl.: G01F 23/284, G01S 7/02, G01S 13/88, G01S 7/35, G01S 7/282, G01S 7/40, G01S 13/87, G01F 25/00

(54) **FÜLLSTANDRADAR MIT VARIABLER SENDELEISTUNG**
RADAR LEVEL METER WITH VARIABLE TRANSMITTING POWER
RADAR DE NIVEAU A PUISSANCE D'EMISSION VARIABLE

(30) Priorität: 30.11.2005 DE 102005057094; 30.11.2005 US 740747 P
(43) Veröffentlichungstag der Anmeldung: 13.08.2008
(73) Patentinhaber: VEGA Grieshaber KG, 77709 Wolfach (DE)
(72) Erfinder: FEHRENBACH, Josef, 77716 Haslach (DE); SCHULTHEISS, Daniel, 78132 Hornberg (DE); MÜLLER, Christoph, 77728 Oppenau (DE); CORBE, Bernhard, 77746 Schutterwald (DE)
(74) Vertreter: Maiwald Patent- und Rechtsanwaltsgesellschaft mbH
(86) Internationale Anmeldenummer: PCT/EP2006/011506
(87) Internationale Veröffentlichungsnummer: WO 2007/062842

(56) Entgegenhaltungen:
- EP-A1- 0 621 944
- EP-A2- 0 451 987
- DE-A1- 2 312 145
- US-A- 3 985 030
- US-A- 4 805 453
- US-A1- 2005 024 259
- US-A1- 2005 035 901

## Beschreibung

### Technisches Gebiet

Die vorliegende Erfindung betrifft ein mit variabler Sendeleistung zur Messung eines Füllstands und ein Verfahren zum Messen eines Füllstands.

### Hintergrund der Erfindung

Bekannte Füllstandmessgeräte für berührungslose Messung weisen eine Antenne auf, welche Signale (Radar- oder Mikrowellen, Ultraschall) aussendet bzw. empfängt, um den Füllstand eines Mediums z. B. in einem Füllgutbehälter zu ermitteln. Die Antenne eines solchen Füllstandmessgeräts ist dabei beispielsweise innerhalb eines Behälters angeordnet.

Die Qualität der empfangenen Messsignale bei einer Füllstandmessung mit einem Füllstandmessgerät hängt dabei stark von der Qualität der Sende-/Empfangseinheit ab. Insbesondere ist hier die Stärke bzw. Amplitude des Empfangssignals kritisch. Ist die Amplitude klein, beispielsweise weil das Messsignal auf seinem Weg vom Sender zum Füllgut und zurück stark gedämpft wurde, leidet die Qualität der Signalauswertung und somit das Messergebnis. Ist auf der anderen Seite die Amplitude des empfangenen Signals zu hoch, übersteuert die Empfangseinheit. Dies führt dann zu einer Fehlmessung.

### Darstellung der Erfindung

Es ist eine Aufgabe der vorliegenden Erfindung, ein Füllstandmessgerät mit verbesserter Empfangssignalstärke auch bei stark variierenden Umgebungsbedingungen anzugeben.

Die Erfindung ist in den unabhängigen Ansprüchen definiert. Im Speziellen werden gemäß der Erfindung ein Füllstandmessgerät, wie in Anspruch 1 angegeben, und ein Verfahren zum Messen eines Füllstandes, wie in Anspruch 12 angegeben, vorgeschlagen.

Gemäß einem Ausführungsbeispiel der vorliegenden Erfindung ist ein Füllstandmessgerät mit variabler Sendeleistung zur Messung eines Füllstands in einem Tank angegeben, das Füllstandmessgerät umfassend eine Generatoreinheit zum Erzeugen eines Sendesignals und eine Steuereinheit zum Steuern der Generatoreinheit, wobei die Generatoreinheit zum wahlweisen Erzeugen einer ersten Sendeleistung des Sendesignals oder einer zweiten Sendeleistung des Sendesignals ausgeführt ist. Beispielsweise kann die Generatoreinheit gemäß diesem Ausführungsbeispiel der vorliegenden Erfindung immer dann ein Sendesignal mit der ersten Sendeleistung erzeugen, wenn es sich um relativ gute Umgebungsbedingungen handelt, also mit geringen Verlusten des Sendesignals auf seinem Weg durch einen Füllgutbehälter zurück zum Füllstandmessgerät gerechnet werden kann. Die Sendeleistung ist hier dann entsprechend gering eingestellt. Andererseits kann die Generatoreinheit bei erschwerten Umweltbedingungen, wenn sich beispielsweise das Füllgut relativ weit weg vom Füllstandmessgerät befindet oder bei einer relativ stark absorbierenden Atmosphäre die Sendeleistung des Sendesignals entsprechend hoch einstellen (entsprechend der zweiten Sendeleistung). Hierdurch ist gewährleistet, dass auch bei erschwerten Bedingungen ein ausreichend starkes Empfangssignal seinen Weg zurück zum Detektor des Füllstandmessgeräts findet, so dass die Qualität des Messergebnisses gewahrt bleibt.

In anderen Worten kann es sich hier um eine Anpassung der Sendeleistung derart handeln, dass die Pegel der Empfangssignale optimal werden.

US 3 985 030 A offenbart ein Füllstandmessgerät mit variabler Sendeleistung. Zur Steuerung der Sendeleistung wird die Pulslänge des ausgesendeten Signals verändert.

EP 0 451 987 A2 beschreibt ein Messgerät, das einen Oszillator und eine Signalstärkeänderungseinheit aufweist, die direkt hinter die Empfangsantenne geschaltet ist und die Stärke des Empfangssignals ändern kann. Die Signalstärkeänderungseinheit weist ein variables Dämpfungsglied auf, welches das Signal proportional zu einem Steuersignal dämpft.

US 2005/0024259 A1 beschreibt ein Füllstandradar mit einem Sendeoszillator. DE 23 12 145 A1 beschreibt ein veränderliches Dämpfungsglied, das der Sendeantenne direkt vorgeschaltet ist.

Gemäß einem weiteren Ausführungsbeispiel der vorliegenden Erfindung umfasst die Generatoreinheit einen ersten Oszillator zum Erzeugen eines ersten Oszillatorsignals und einen zweiten Oszillator zum Erzeugen eines zweiten Oszillatorsignals, wobei die Steuereinheit zum wahlweisen Ansteuern des ersten Oszillators oder des zweiten Oszillators ausgeführt ist.

Je nachdem, ob nun das erste Oszillatorsignal oder das zweite Oszillatorsignal erzeugt wird, wird entweder ein Sendesignal mit erster (niedriger) Sendeleistung ausgegeben oder ein Sendesignal mit zweiter (hoher) Sendeleistung.

Dies kann beispielsweise dadurch realisiert werden, dass die beiden Oszillatoren unterschiedliche Leistungen abgeben (also beispielsweise unterschiedlich dimensioniert sind) oder dass die Ausgangsleistung des zweiten Oszillators stärker verstärkt wird als die Ausgangsleistung des ersten Oszillators, oder aber auch indem die Ausgangsleistung des ersten Oszillators gedämpft wird (wobei dann die beiden Oszillatoren z.B. identisch ausgeführt sein können).

Gemäß einem weiteren Ausführungsbeispiel der vorliegenden Erfindung umfasst das Füllstandmessgerät eine Referenzsignalgewinnung (Abzapfung) aus dem ersten Oszillatorsignal oder dem zweiten Oszillatorsignal entsprechend der Ansteuerung, also je nachdem, ob der erste Oszillator oder der zweite Oszillator aktiviert ist.

Eine derartige Abzapfung kann beispielsweise dazu dienen, bei Füllstandsmessgeräten nach dem Puls-Laufzeit-Prinzip ein Referenzsignal abzukoppeln, bevor das Sendesignal an die Antenne abgegeben wird und das Füllstandmessgerät verlässt. Dieses abgekoppelte Signal kann dann im Folgenden zur Laufzeitbestimmung des Sendesignals eingesetzt werden.

Gemäß einem weiteren Ausführungsbeispiel der vorliegenden Erfindung umfasst der Füllstandmessgerät weiterhin ein Dämpfungselement zum Einstellen einer Dämpfung des ersten Oszillatorsignals.

Somit können beispielsweise beide Oszillatoren identisch ausgeführt sein, wobei das Ausgangssignal des ersten Oszillators entsprechend gedämpft wird, so dass letztendlich zwei verschiedene Sendeleistungen bereitgestellt werden. Ein solches Dämpfungselement kann in die Wellenleitung zwischen dem ersten Oszillator und der Referenzsignal-Abkopplung integriert sein.

Gemäß einem weiteren Ausführungsbeispiel der vorliegenden Erfindung ist das Dämpfungselement als eine auf ein Substrat aufklebbare Dämpfungsmatte ausgeführt.

Somit ist das Dämpfungselement nicht in die Leitung integriert, sondern vielmehr in der Nähe der Leitung angebracht. Durch Änderung der Größe, Dicke oder eines anderen Parameters der Dämpfungsmatte kann der Dämpfungsfaktor entsprechend eingestellt werden, je nach Anforderung an das Füllstandmessgerät.

Gemäß einem weiteren Ausführungsbeispiel der vorliegenden Erfindung weist das Dämpfungselement eine variable, steuerbare Dämpfung auf, wobei die Steuereinheit zum Steuern des Dämpfungselements ausgeführt ist.

Somit kann die Dämpfung je nach Anforderungen individuell eingestellt werden, Es sind auch in diesem Fall zwei Oszillatoren vorgesehen, wobei beide Oszillatoren beispielsweise identisch ausgeführt sind, also dieselbe Leistung emittieren.

Gemäß einem weiteren Ausführungsbeispiel der vorliegenden Erfindung weist das Füllstandmessgerät weiterhin einen Sendeverstärker zum Einstellen einer Verstärkung des zweiten Oszillatorsignals auf.

Natürlich können in diesem Fall zwei identische Oszillatoren vorgesehen sein, wobei die Leistung des einen verstärkt wird und zusätzlich kann die Leistung des anderen durch beispielsweise eine Dämpfungsmatte gedämpft werden, so dass der Leistungsunterschied zwischen den beiden Leistungen noch größer wird.

Gemäß der vorliegenden Erfindung umfasst das Füllstandmessgerät einen Richtkoppler mit einem ersten Eingang, einem zweiten Eingang, einem ersten Ausgang und einem zweiten Ausgang, wobei der erste Eingang des Richtkopplers mit dem ersten Oszillator und der zweite Eingang des Richtkopplers mit dem zweiten Oszillator verbunden sind. Weiterhin ist der erste Ausgang des Richtkopplers als Gewinnung des Referenzsignals ausgeführt und der zweite Ausgang des Richtkopplers ist zur Ausgabe des Sendesignals ausgeführt. Der Richtkoppler kann weiterhin zum Dämpfen eines Signals ausgeführt sein, das am ersten Eingang eingespeist und am zweiten Ausgang ausgegeben wird.

Beispielsweise wird ein Signal, das am ersten Eingang eingegeben und am ersten Ausgang ausgegeben wird, sehr viel weniger stark gedämpft. Ebenso wird ein Signal, welches am zweiten Eingang eingegeben und am zweiten Ausgang ausgegeben wird, sehr viel weniger stark gedämpft, wohingegen ein solches am zweiten Eingang eingegebenes Signal, wenn es am ersten Ausgang ausgegeben wird, stark gedämpft wird.

Auf diese Weise kann der Pegelunterschied zwischen den beiden Oszillatorsignalen noch weiter erhöht werden. Hierdurch können die Dämpfungsmatte bzw. der Verstärker ggf. vollständig entfallen.

Gemäß einem weiteren Ausführungsbeispiel der vorliegenden Erfindung ist der Richtkoppler als symmetrischer oder unsymmetrischer Hybridkoppler ausgeführt. Ein solcher symmetrischer oder unsymmetrischer Hybridkoppler kann leicht in die Schaltung integriert werden.

Gemäß einem weiteren Ausführungsbeispiel der vorliegenden Erfindung ist das Füllstandmessgerät als Pulsradarsystem ausgeführt. Bei den ersten und zweiten Oszillatorsignalen handelt es sich um elektromagnetische Pulse.

Natürlich können die Oszillatoren aber auch derart ausgeführt sein, dass sie Ultraschallwellen emittieren. In diesem Fall handelt es sich bei dem Füllstandmessgerät dann um ein Ultraschallmessgerät.

Gemäß einem weiteren Ausführungsbeispiel der vorliegenden Erfindung umfasst das Füllstandmessgerät weiterhin eine Empfangseinheit, wobei die Steuereinheit mit der Empfangseinheit gekoppelt ist, und wobei die Steuereinheit zum Steuern der Generatoreinheit derart ausgeführt ist, dass die erste Sendeleistung erzeugt wird, wenn die Stärke des Empfangssignals einen Schwellwert übersteigt.

Auf diese Weise können Testmessungen durchgeführt werden, um ein Gefühl dafür zu bekommen, ob die empfangene Leistung in einem akzeptablen Bereich liegt. Übersteigt die empfangene Signalstärke einen oberen Schwellwert, kann beispielsweise vom zweiten Oszillator auf den ersten Oszillator umgeschaltet werden bzw. es kann die Dämpfung erhöht werden, so dass die Leistung des Sendesignals sinkt. Auf der anderen Seite, wenn beispielsweise das Empfangssignal eine Stärke aufweist, welche unterhalb einem zweiten Schwellwert liegt, kann die Leistung des Sendesignals durch entsprechende Ansteuerung der Generatoreinheit erhöht werden. Beispielsweise wird hierzu von dem ersten Oszillator auf den zweiten Oszillator umgeschaltet oder die Dämpfung wird erniedrigt.

Selbstverständlich ist es möglich, noch zusätzliche weitere Oszillatoren und ggf. entsprechende Dämpfungselemente oder Verstärker vorzusehen, um beispielsweise mehr als zwei (diskrete) Sendeleistungen zur Verfügung zu haben.

Gemäß einem weiteren Ausführungsbeispiel der vorliegenden Erfindung erfolgen der Empfang, die Leistungsbestimmung und der Vergleich mit dem Schwellwert der Empfangssignale automatisch.

Beispielsweise können derartige Signalstärkemessungen in regelmäßigen Abständen automatisch vorgenommen werden. Somit kann eine weitgehend kontinuierliche Regelung der Sendeleistung erfolgen, welche jeweils auf die äußeren Bedingungen angepasst ist.

Kann die Sendeleistung kontinuierlich (nicht in diskreten Stufen) variiert werden, kann zunächst versucht werden, durch möglichst viel Sendeleistung auch kleine Empfangssignale noch detektieren zu können. Aufgrund einer Bewertung der Nutzsignalstärke wird dann die Sendeleistung solange reduziert, bis der Empfangspegel im optimalen Bereich des Empfängers liegt.

Gemäß einem weiteren Ausführungsbeispiel der vorliegenden Erfindung ist ein Verfahren zum Messen eines Füllstands in einem Tank angegeben, bei dem eine Generatoreinheit zum wahlweisen Erzeugen einer ersten Sendeleistung oder einer zweiten Sendeleistung eines Sendesignals gesteuert wird und das Sendesignal entsprechend mit wahlweise der ersten Sendeleistung oder der zweiten Sendeleistung erzeugt wird. Hierdurch wird ein Verfahren bereitgestellt, durch welches die Sendeleistung derart anpassbar ist, dass die Empfangssignale jeweils optimal werden.

Gemäß einem weiteren Ausführungsbeispiel der vorliegenden Erfindung umfasst das Verfahren weiterhin ein Empfangen eines Empfangssignals, eine Bestimmung einer Leistung des Empfangssignalsund ein Steuern der Generatoreinheit derart, dass die erste Sendeleistung erzeugt wird, wenn die Signalstärke des Empfangssignals einen Schwellwert übersteigt.

Gemäß einem weiteren Ausführungsbeispiel der vorliegenden Erfindung umfasst die Generatoreinheit einen ersten Oszillator zum Erzeugen eines ersten Oszillatorsignals und einen zweiten Oszillator zum Erzeugen eines zweiten Oszillatorsignals.

Gemäß einem weiteren Ausführungsbeispiel der vorliegenden Erfindung steuert die Generatoreinheit eine variable Dämpfungsstufe oder eine variable Verstärkungsstufe abhängig von einer bestimmten Signalstärke des Empfangssignals.

Gemäß einem weiteren Ausführungsbeispiel der vorliegenden Erfindung steuert die Generatoreinheit die variable Dämpfungsstufe oder die variable Verstärkungsstufe unabhängig von der Signalstärke des Empfangssignals.

### Kurze Beschreibung der Zeichnungen

Im Folgenden werden mit Verweis auf die Figuren bevorzugte Ausführungsbeispiele der vorliegenden Erfindung beschrieben.
Fig. 1 zeigt eine schematische Querschnittsdarstellung eines Füllstandmessgeräts entsprechend einem Ausführungsbeispiel der vorliegenden Erfindung.
Fig. 2 zeigt ein schematisches Blockschaltbild einer Generatoreinheit und einer Steuereinheit entsprechend einem Ausführungsbeispiel der vorliegenden Erfindung.
Fig. 3 zeigt ein schematisches Blockschaltbild einer Generatoreinheit und einer Steuereinheit entsprechend einem weiteren Ausführungsbeispiel der vorliegenden Erfindung.
Fig. 4 zeigt eine schematische Darstellung eines Richtkopplers entsprechend einem Ausführungsbeispiel der vorliegenden Erfindung.
Fig. 5 zeigt ein schematisches Blockschaltbild einer Generatoreinheit und einer Steuereinheit entsprechend einem weiteren Ausführungsbeispiel der vorliegenden Erfindung.
Fig. 6 zeit ein schematisches Blockschaltbild einer Generatoreinheit und einer Steuereinheit

Die Darstellungen in den Figuren sind schematisch und nicht maßstäblich.

### Detaillierte Beschreibung von exemplarischen Ausführungsformen

In der folgenden Figurenbeschreibung werden für die gleichen oder ähnlichen Elemente die gleichen Bezugsziffern verwendet.

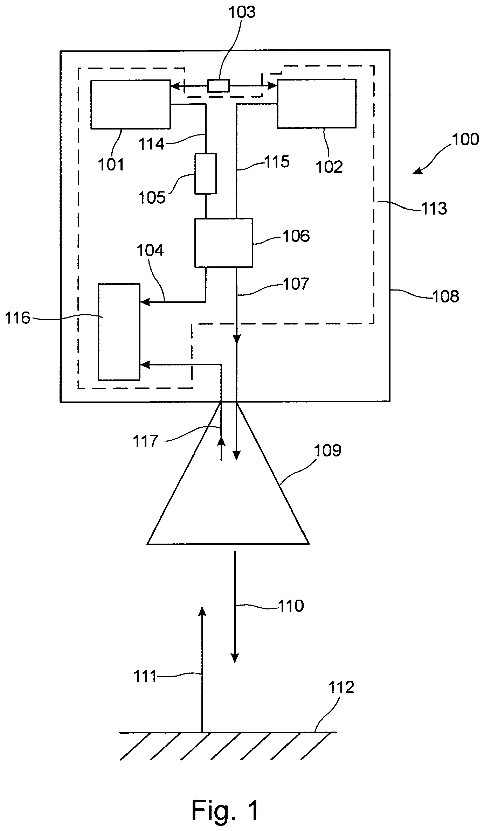

Fig. 1 zeigt eine schematische Querschnittsdarstellung eines Füllstandradars 100 gemäß einem Ausführungsbeispiel der vorliegenden Erfindung. Das Füllstandradar 100 weist eine Antenne 109 und ein Gehäuse 108 auf, welches die Generatoreinheit 113 die Steuereinheit 103 und die Empfangseinheit 116 birgt. In der Generatoreinheit 113 werden Sendesignale 107 erzeugt, welche an die Antenne 109 abgegeben werden und dann als Sendesignale 110 in Richtung Füllgut 112 ausgesendet werden. Die Sendesignale 110 werden dann auf der Füllgutoberfläche 112 reflektiert und als reflektierte Signale 111 von der Antenne 109 empfangen und nachfolgend als Signale 117 der Empfangseinheit 116 zugeführt und dort entsprechend ausgewertet.

Beispielsweise handelt es sich bei den erzeugten Sendesignalen 107 um elektromagnetische Hochfrequenzsignale, wie sie bei Radarmessungen typischerweise eingesetzt werden. Frequenzen liegen hier beispielsweise im Gigahertzbereich, insbesondere im Bereich zwischen 5 GHz und 100 GHz.

Natürlich kann die in Fig. 1 dargestellte Füllstandmesseinrichtung auch als Ultraschallgerät ausgeführt sein. Dann handelt es sich bei den erzeugten Signalen nicht um elektromagnetische Signale, sondern um Schallsignale, welche beispielsweise von den Oszillatoren 101, 102 erzeugt werden.

Die Generatoreinheit 113 umfasst in dem in Fig. 1 dargestellten Ausführungsbeispiel zwei Oszillatoren 101, 102, welche jeweils ein Oszillatorsignal 114, 115 erzeugen. Das von der ersten Oszillatoreinheit 101 erzeugte Oszillatorsignal 114 wird über ein Dämpfungselement 105 gedämpft. Beide Signale 114 (über Dämpfungselement 105), und 115 laufen dann in einen Richtkoppler 106, in welchem ein Referenzsignal 104 abgezapft oder abgezweigt wird. Das Ausgangssignal 107 wird dann an die Antenne weitergeleitet.

Da der Dynamikumfang eines herkömmlichen Pulsradarsystems sowohl im HF- als auch im Empfängerbereich begrenzt ist, werden erfindungsgemäß bei unterschiedlichen Anwendungen verschiedene Sendepegel verwendet (welche im Fall der Fig. 1 vom ersten Oszillator 101 in Verbindung mit dem Dämpfungselement 105 bzw. vom zweiten Oszillator 102 erzeugt werden).

Das Dämpfungselement 105 ist beispielsweise als Dämpfungsmatte ausgeführt, welche entsprechend dimensionierbar ist.

Das Dämpfungselement 105 kann aber auch als variables Dämpfungselement ausgeführt sein, welches von der Steuereinheit 103 entsprechend angesteuert werden kann, so dass die Dämpfung während der Messung automatisch verändert werden kann.

Die Steuereinheit 103 ist mit den beiden Oszillatoren 101, 102 verbunden, so dass sie die beiden Oszillatoren 101, 102 individuell ansteuern kann. So wird der erste Oszillator 101 beispielsweise dann von der Steuereinheit 103 angesteuert, wenn eine niedrige Sendeleistung gewünscht ist. Der zweite Oszillator 102 wird beispielsweise dann von der Steuereinheit 103 angesteuert, wenn eine hohe Sendeleistung gewünscht ist.

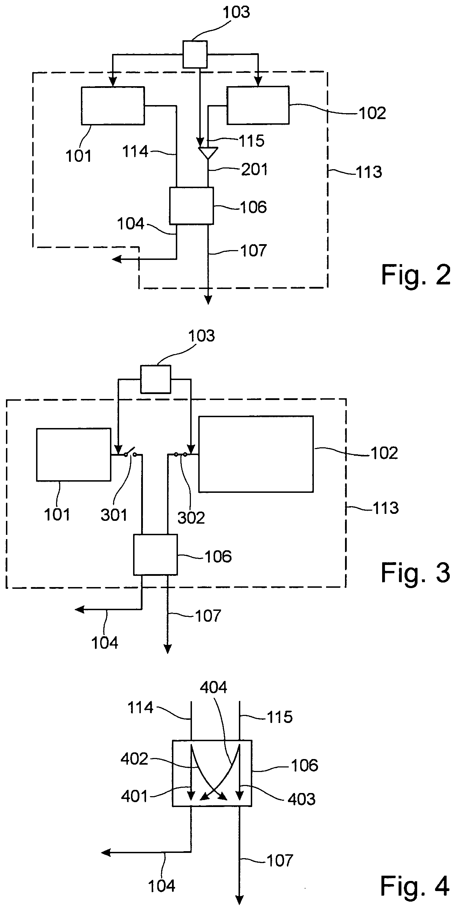

Fig. 2 zeigt ein schematisches Blockschaltbild einer Generatoreinheit 113 und einer Steuereinheit 103 gemäß einem weiteren Ausführungsbeispiel der vorliegenden Erfindung. Im Übertragungszweig 115 des zweiten Oszillators 102 ist ein Verstärkungselement 201 vorgesehen, welches der Verstärkung des zweiten Oszillatorsignals 115 dient. Dieses Verstärkungselement 201 kann ebenfalls an die Steuereinheit 103 angeschlossen sein, so dass die Verstärkung gesteuert werden kann.

Fig. 3 zeigt ein schematisches Blockschaltbild einer Generatoreinheit 113 und einer Steuereinheit 103 gemäß einem weiteren Ausführungsbeispiel der vorliegenden Erfindung. Hier sind die beiden Oszillatoren 101, 102 unterschiedlich dimensioniert, weisen also verschiedene Ausgangsleistungen auf. Dies kann beispielsweise dadurch geschehen, dass die Oszillatoren 101, 102 verschiedene Betriebszustände, wie beispielsweise verschiedene Gate-Vorspannungen (bei Fet-Oszillatoren) oder verschiedene Betriebsspannungen aufweisen. Derartige Oszillatoren können beispielsweise in Form von GaAs-Feldeffekttransistor-Oszillatoren ausgeführt sein. Es sind aber auch andere Oszillatoren möglich, insbesondere (im Fall eines Ultraschall-Füllstandmessgeräts) entsprechende akustische Oszillatoren.

Weiterhin sind Schalter 301, 302 vorgesehen, welche von der Steuereinheit 103 entsprechend schaltbar sind, so dass je nach Anforderungen entweder der eine Oszillator 101 oder der andere Oszillator 102 zugeschaltet ist.

Fig. 4 zeigt eine schematische Darstellung eines Richtkopplers 106 entsprechend einem Ausführungsbeispiel der vorliegenden Erfindung. Dieser Richtkoppler 106 ist beispielsweise als unsymmetrisches Hybridkoppler ausgeführt und kann in die Schaltung 113 integriert werden.

Das eingehende Signal 114 des ersten Oszillators 101 durchläuft den Richtkoppler beispielsweise mit einer relativ geringen Dämpfung von -1 dB, um dann am ersten Ausgang 104 (der Abzapfung für das Referenzsignal) abgenommen zu werden. Dies ist durch Bezugszeichen 401 symbolisiert.

Wird das Eingangssignal 114 des ersten Oszillators 101 hingegen am zweiten Ausgang (als Sendesignal 107) abgenommen, wird es vom Richtkoppler auf seinem Weg 402 um beispielsweise -10 dB gedämpft. Natürlich kann auch eine höhere Dämpfung oder eine niedrigere Dämpfung entsprechend der Auslegung des Richtkopplers 106 erfolgen (dies gilt im Falle eines unsymmetrischen Hybridkopplers) Bei symmetrischen Hybridkopplern sind die Dämpfungen in beiden Signalrichtungen (401 und 402) gleich groß.

Analog wird das vom zweiten Oszillator 102 eingehende Signal 115 auf seinem Weg durch den Richtkoppler in Richtung Antenne nur um -1 dB gedämpft (symbolisiert durch Bezugszeichen 403). Wenn das zweite Signal 115 hingegen quer durch den Richtkoppler entlang Pfeil 404 läuft, um dem Ausgang 104 zugeführt zu werden (Abzapfung), dann wird es entsprechend stärker, beispielsweise um -10 dB, gedämpft.

Es werden also von der Steuereinheit 103 wahlweise der erste Oszillator 101 oder der zweite Oszillator 102 angesteuert. Die Dämpfung für einen der beiden Oszillatorzweige kann mittels aufklebbarer Dämpfungsmatte erzeugt werden. Es kann auch ein Abgleich beider Oszillatoren vorgesehen sein. Dieser Abgleich erfolgt durch Variation von Versorgungsspannung oder Betriebszustand des Oszillators. Dadurch können Pegelunterschiede der beiden Oszillatoren erreicht werden. Auch kann ein nachgeschalteter Verstärker (zwischen Hybridkoppler und Antenne) vorgesehen sein (nicht gezeigt in den Figuren), welcher zu jeder Zeit aktiv ist.

Durch die Verwendung eines unsymmetrischen Hybridkopplers 106 kann der Pegelunterschied zwischen beiden Oszillatoren 101, 102 noch erhöht werden. Dadurch kann die Dämpfungsmatte bzw. das Dämpfungselement 105 ggf. ganz entfallen oder zumindest wesentlich kleiner ausgeführt werden.

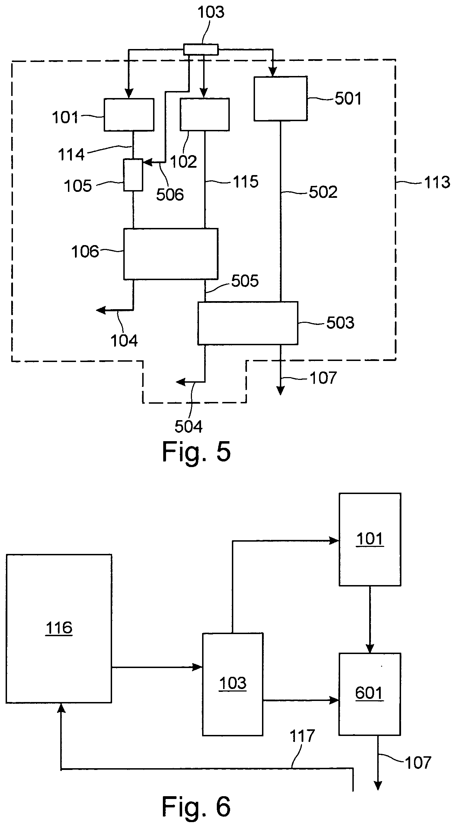

Fig. 5 zeigt ein weiteres schematisches Blockschaltbild einer Generatoreinheit 113 mit Steuereinheit 103 gemäß einem weiteren Ausführungsbeispiel der vorliegenden Erfindung. Wie in Fig. 5 zu erkennen, weist die Generatoreinheit 113 drei verschiedene separate Oszillatoren 101, 102, 501 auf, wobei der dritte Oszillator 501 zur Abgabe einer höheren Sendeleistung ausgelegt ist, als die beiden ersten Oszillatoren 101, 102.

Alle drei Oszillatoren 101, 102, 501 werden durch die Steuereinheit 103 angesteuert. Das Ausgangssignal des ersten Oszillators 102 wird durch das Dämpfungselement 105 gedämpft, bevor es dem Richtkoppler 106 zugeführt wird. Die Dämpfung kann von der Steuereinheit 103 über die Leitung 506 eingestellt werden. Das zweite Oszillatorsignal 115 des zweiten Oszillators 102 wird ebenfalls dem Richtkoppler 106 zugeführt. Der Richtkoppler 106 sorgt nun dafür, dass eine Abzapfung 104 eines Referenzsignals aus dem ersten Oszillatorsignal bzw. dem zweiten Oszillatorsignal (je nach Ansteuerung, also je nachdem, ob der erste Oszillator oder der zweite Oszillator aktiviert ist) vorgenommen wird. Weiterhin sorgt der Richtkoppler 106 dafür, dass ein Ausgangssignal 505 erzeugt wird, welches z.B. nur geringfügig gedämpft ist.

Dieses Ausgangssignal 505 wird einem zweiten Richtkoppler 503 zugeführt. Weiterhin wird dem zweiten Richtkoppler 503 ein drittes Oszillatorsignal 502 vom dritten Oszillator 501 zugeführt. Dieses dritte Oszillatorsignal 502 weist eine höhere Leistung auf als das Ausgangssignal 505.

Der zweite Richtkoppler 503 sorgt nun dafür, dass einerseits ein Sendesignal 107 ausgegeben wird, welches nur schwach gedämpft ist, und dass andererseits eine zweite Abzapfung 504 vorgenommen wird, als zweites Referenzsignal.

Gemäß einem weiteren Ausführungsbeispiel der vorliegenden Erfindung ist keine Abzapfung 104 vorgesehen, sondern lediglich eine einzige Abzapfung 504.

In dem in Fig. 5 gezeigten Ausführungsbeispiel können also drei verschiedene Ausgangssendeleistungen des Sendesignals 107 erzeugt werden, je nachdem, welcher der drei Oszillatoren 101, 102, 501 von der Steuereinheit 103 angesteuert wird. Es wird also ein großer Dynamikumfang bereitgestellt, so dass die Sendeleistung jeweils an die entsprechende Anwendung angepasst werden kann. Natürlich können auch weitere Oszillatoren in der Generatoreinheit 113 integriert sein, so dass weitere Ausgangsleistungen erzeugt werden können. Hierdurch wird der Dynamikumfang der Füllstandmesseinrichtung weiter erhöht.

In dem in Fig. 6 gezeigten Blockschaltbild ist nur ein Sendeoszillator 101 realisiert , der mittels variabler Dämpfung/Verstärkungseinheit 601 unterschiedliche Sendepegel 107 erzeugt. Die variable Dämpfungs/Verstärkungseinheit 601 wird dabei von der Steuereinheit 103 angesteuert. Sie erhält von der Empfangseinheit 116 die entsprechende Information, den Sendepegel zu erhöhen oder zu verringern. Die variable Dämpfungs/Verstärkereinheit 601 kann verschieden ausgeführt sein. Beispielsweise als Verstärker oder variables Dämfpungsglied.

Die Erfindung beschränkt sich in ihrer Ausführung nicht auf die in den Figuren dargestellten bevorzugten Ausführungsformen. Vielmehr ist ihr Schutzbereich durch die nachfolgenden Patentansprüche definiert.

## Patentansprüche

1. Füllstandmessgerät mit variabler Sendeleistung zur Messung eines Füllstands, das Füllstandmessgerät umfassend:
eine Generatoreinheit (113) zum Erzeugen eines Sendesignals (107);
eine Steuereinheit (103) zum Steuern der Generatoreinheit (113);
einen Richtkoppler (106) mit einem ersten Eingang einem zweiten Eingang einem ersten Ausgang und einem zweiten Ausgang;
wobei die Generatoreinheit (113) zum Erzeugen verschiedener Sendeleistungen des Sendesignals (107) ausgeführt ist;
wobei die Generatoreinheit (113) umfasst:
einen ersten Oszillator (101) zum Erzeugen eines ersten Oszillatorsignals (114);
einen zweiten Oszillator (102) zum Erzeugen eines zweiten Oszillatorsignals (115);
wobei die Steuereinheit (103) zum wahlweisen Ansteuern des ersten Oszillators (101) oder des zweiten Oszillators (102) ausgeführt ist;
wobei der erste Eingang des Richtkopplers (106) mit dem ersten Oszillator (101) und der zweite Eingang des Richtkopplers (106) mit dem zweiten Oszillator (102) verbunden sind;
wobei der erste Ausgang des Richtkopplers (106) eine Abzapfung zum Abzapfen des Referenzsignals (104) ist und wobei der zweite Ausgang des Richtkopplers (106) zur Ausgabe des Sendesignals (107) ausgeführt ist.

2. Füllstandmessgerät nach Anspruch 1,
wobei die Abzapfung des Referenzsignals (104) aus dem ersten Oszillatorsignal oder dem zweiten Oszillatorsignal entsprechend der Ansteuerung, also je nachdem, ob der erste Oszillator (101) oder der zweite Oszillator (102) aktiviert ist, erfolgt.

3. Füllstandmessgerät nach einem der vorhergehenden Ansprüche, weiterhin umfassend: ein Dämpfungselement (105) zum Einstellen einer Dämpfung des ersten Oszillatorsignals (114).

4. Füllstandmessgerät nach Anspruch 3,
wobei das Dämpfungselement (105) als eine auf ein Substrat aufklebbare Dämpfungsmatte ausgeführt ist.

5. Füllstandmessgerät nach Anspruch 3 oder 4,
wobei das Dämpfungselement (105) eine variable, steuerbare Dämpfung aufweist; und
wobei die Steuereinheit (103) zum Steuern des Dämpfungselements (105) ausgeführt ist.

6. Füllstandmessgerät nach einem der vorhergehenden Ansprüche, weiterhin umfassend:
einen Sendeverstärker (201) zum Einstellen einer Verstärkung des zweiten Oszillatorsignals (115).

7. Füllstandmessgerät nach Anspruch 1,
wobei der Richtkoppler (106) als unsymmetrischer oder symmetrischer Hybridkoppler ausgeführt ist.

8. Füllstandmessgerät nach einem der vorhergehenden Ansprüche,
wobei die ersten und zweiten Oszillatorsignale elektromagnetische Signale sind; und
wobei das Füllstandmessgerät als Füllstandradar ausgeführt ist.

9. Füllstandmessgerät nach einem der vorhergehenden Ansprüche,
wobei das Füllstandmessgerät als Pulsradarsystem ausgeführt ist.

10. Füllstandmessgerät nach einem der vorhergehenden Ansprüche, weiterhin umfassend:
eine Empfangseinheit (116) zur Bestimmung der Signalstärke eines Empfangssignals;
wobei die Steuereinheit (103) mit der Empfangseinheit gekoppelt ist; und
wobei die Steuereinheit (103) zum Steuern der Generatoreinheit (113) derart ausgeführt ist, dass die erste Sendeleistung erzeugt wird, wenn die Signalstärke des Empfangssignals einen Schwellwert übersteigt.

11. Füllstandmessgerät nach Anspruch 10,
wobei der Empfang, die Signalstärkebestimmung und der Vergleich mit dem Schwellwert der Empfangssignalstärke automatisch erfolgen.

12. Verfahren zum Messen eines Füllstands mit einem Füllstandmessgerät nach einem der Ansprüche 1 bis 11, das Verfahren umfassend die Schritte:
Steuern der Generatoreinheit (113) des Füllstandmessgeräts zum wahlweisen Erzeugen einer ersten Sendeleistung eines Sendesignals (107) oder einer zweiten Sendeleistung des Sendesignals (107);
Erzeugen des Sendesignals (107) mit wahlweise der ersten Sendeleistung oder der zweiten Sendeleistung.

13. Verfahren nach Anspruch 12, weiterhin umfassend die Schritte:
Empfangen eines Empfangssignals;
Bestimmung einer Signalstärke des Empfangssignals;
Steuern der Generatoreinheit (113) derart, dass die erste Sendeleistung erzeugt wird, wenn die Signalstärke des Empfangssignals einen Schwellwert übersteigt.

14. Verfahren nach Anspruch 12,
wobei die Generatoreinheit (113) eine variable Dämpfungsstufe oder eine variable Verstärkungsstufe (601) abhängig von einer bestimmten Signalstärke des Empfangssignals steuert.

15. Verfahren nach Anspruch 12,
wobei die Generatoreinheit (113) die variable Dämpfungsstufe oder die variable Verstärkungsstufe (601) unabhängig von der Signalstärke des Empfangssignals steuert.

## Claims

1. A level measuring instrument with variable transmitting power for measuring a filling level, the level measuring instrument comprising:
a generator unit (113) for generating a transmission signal (107);
a controller (103) for controlling the generator unit (113); and
a directional coupler (106) with a first input, a second input, a first output and a second output;
wherein the generator unit (113) is configured for generating different transmitting powers of the transmission signal (107);
wherein the generator unit (113) comprises:
a first oscillator (101) for generating a first oscillator signal (114);
a second oscillator (102) for generating a second oscillator signal (115);
wherein the controller (103) is configured for selectively driving either the first oscillator (101) or the second oscillator (102);
wherein the first input of the directional coupler (106) is connected to the first oscillator (101) and the second input of the directional coupler is connected to the second oscillator (102);
wherein the first output of the directional coupler (106) is a tap (104) for tapping the reference signal, and wherein the second output of the directional coupler is configured for outputting the transmission signal (107).

2. The level measuring instrument according to claim 1,
wherein the reference signal (104) is tapped from the first oscillator signal or the second oscillator signal, in accordance with the driving by the controller, depending on whether the first oscillator (101) or the second oscillator (102) is activated.

3. The level measuring instrument according to any of the preceding claims, further comprising:
an attenuation element (105) for setting attenuation of the first oscillator signal (114).

4. The level measuring instrument according to claim 3,
wherein the attenuation element (105) is configured as an attenuation mat to be adhered to a substrate.

5. The level measuring instrument according to claim 3 or 4,
wherein the attenuation element (105) comprises a variable, controllable attenuation; and
wherein the controller (103) is configured for controlling the attenuation element (105).

6. The level measuring instrument according to any of the preceding claims, further comprising:
a transmission amplifier (201) for setting amplification of the second oscillator signal (115).

7. The level measuring instrument according to claim 1,
wherein the directional coupler (106) is configured as an asymmetric or symmetric hybrid coupler.

8. The level measuring instrument according to any of the preceding claims,
wherein the first and second oscillator signals are electromagnetic signals; and
wherein the level measuring instrument is configured as a filling level radar.

9. The level measuring instrument according to any of the preceding claims,
wherein the level measuring instrument is configured as a pulse radar system.

10. The level measuring instrument according to any of the preceding claims, further comprising:
a receiving unit (116) for determining the signal strength of a receiving signal;
wherein the controller (103) is coupled to the receiving unit; and
wherein the controller (103) is configured for controlling the generator unit (113) such that the first transmitting power is generated when the signal strength of the receiving signal exceeds a threshold value.

11. The level measuring instrument according to claim 10,
wherein receipt, determination of signal strength, and comparison with the threshold value of the receiving signal strength are performed automatically.

12. A method for measuring a filling level with a level measuring instrument according to any of the claims 1 to 11, the method comprising the steps of:
controlling a generator unit (113) for selectively generating a first transmitting power of a transmission signal (107) or a second transmitting power of the transmission signal (107);
generating the transmission signal (107) selectively with either the first transmitting power or the second transmitting power.

13. The method according to claim 12, further comprising the steps of:
receiving a receiving signal;
determining a signal strength of the receiving signal;
controlling the generator unit (113) such that the first transmitting power is generated when the signal strength of the receiving signal exceeds a threshold value.

14. The method according to claim 12,
wherein the generator unit (113) controls a variable attenuation stage or a variable amplification stage (601) depending on a defined signal strength of the receiving signal.

15. The method according to claim 12,
wherein the generator unit (113) controls the variable attenuation stage or the variable amplification stage (601) independently from the signal strength of the receiving signal.

## Revendications

1. Appareil de mesure de niveau de remplissage à puissance d'émission variable pour mesurer un niveau de remplissage, l'appareil de mesure de niveau de remplissage comportant :
une unité génératrice (113) pour générer un signal d'émission (107),
une unité de commande (103) pour commander l'unité génératrice (113),
un coupleur directionnel (106) avec une première entrée, une seconde entrée, une première sortie et une seconde sortie,
dans lequel l'unité génératrice (113) est configurée pour générer différentes puissances d'émission du signal d'émission (107),
dans lequel l'unité génératrice (113) comporte :
un premier oscillateur (101) pour générer un premier signal d'oscillateur (114),
un second oscillateur (102) pour générer un second signal d'oscillateur (115),
dans lequel l'unité de commande (103) est configurée pour commander sélectivement le premier oscillateur (101) ou le second oscillateur (102),
dans lequel la première entrée du coupleur directionnel (106) est reliée au premier oscillateur (101) et la seconde entrée du coupleur directionnel (106) est reliée au second oscillateur (102),
dans lequel la première sortie du coupleur directionnel (106) est un point de prélèvement pour prélever le signal de référence (104) et dans lequel la seconde sortie du coupleur directionnel (106) est configurée pour délivrer le signal d'émission (107).

2. Appareil de mesure de niveau de remplissage selon la revendication 1,
dans lequel le prélèvement du signal de référence (104) s'effectue à partir du premier signal d'oscillateur ou du second signal d'oscillateur en fonction de la commande, c'est-à-dire selon si le premier oscillateur (101) ou le second oscillateur (102) est activé.

3. Appareil de mesure de niveau de remplissage selon l'une des revendications précédentes, comportant en outre :
un élément d'atténuation (105) pour régler une atténuation du premier signal d'oscillateur (114).

4. Appareil de mesure de niveau de remplissage selon la revendication 3,
dans lequel l'élément d'atténuation (105) est configuré comme un tapis d'atténuation pouvant être collé sur un substrat.

5. Appareil de mesure de niveau de remplissage selon la revendication 3 ou 4,
dans lequel l'élément d'atténuation (105) présente une atténuation variable, pouvant être commandé, et
dans lequel l'unité de commande (103) est configurée pour commander l'élément d'atténuation (105).

6. Appareil de mesure de niveau de remplissage selon l'une des revendications précédentes, comportant en outre :
un amplificateur d'émission (201) pour régler une amplification du second signal d'oscillateur (115).

7. Appareil de mesure de niveau de remplissage selon la revendication 1,
dans lequel le coupleur directionnel (106) est configuré comme un coupleur hybride asymétrique ou symétrique.

8. Appareil de mesure de niveau de remplissage selon l'une des revendications précédentes,
dans lequel les premier et second signaux d'oscillateur sont des signaux électromagnétiques, et
dans lequel l'appareil de mesure de niveau de remplissage est configuré comme un radar de niveau de remplissage.

9. Appareil de mesure de niveau de remplissage selon l'une des revendications précédentes,
dans lequel l'appareil de mesure de niveau de remplissage est configuré comme un système radar à impulsions.

10. Appareil de mesure de niveau de remplissage selon l'une des revendications précédentes, comportant en outre :
une unité de réception (116) pour déterminer la force de signal d'un signal de réception,
dans lequel l'unité de commande (103) est couplée à l'unité de réception, et
dans lequel l'unité de commande (103) est configurée pour commander l'unité génératrice (113) de sorte que la première puissance d'émission est générée lorsque la puissance de signal du signal d'émission dépasse une valeur de seuil.

11. Appareil de mesure de niveau de remplissage selon la revendication 10,
dans lequel la réception, la détermination de la force de signal et la comparaison à la valeur de seuil de la force du signal de réception s'effectuent automatiquement.

12. Procédé pour mesurer un niveau de remplissage en utilisant un appareil de mesure de niveau de remplissage selon l'une des revendications 1 à 11, le procédé comportant les étapes consistant à :
commander l'unité génératrice (113) de l'appareil de mesure de niveau de remplissage pour générer sélectivement une première puissance d'émission d'un signal d'émission (107) ou une seconde puissance d'émission du signal d'émission (107),
générer sélectivement le signal d'émission (107) avec la première puissance d'émission ou la seconde puissance d'émission.

13. Procédé selon la revendication 12, comportant en outre les étapes consistant à :
recevoir un signal de réception,
déterminer une force de signal du signal de réception,
commander l'unité génératrice (113) de sorte que la première puissance d'émission est générée lorsque la force de signal du signal de réception franchit une valeur de seuil.

14. Procédé selon la revendication 12,
dans lequel l'unité génératrice (113) commande un étage d'atténuation variable ou un étage d'amplification variable (600) en fonction de la force de signal déterminée du signal de réception.

15. Procédé selon la revendication 12,
dans lequel l'unité génératrice (113) commande le niveau d'atténuation variable ou le niveau d'amplification variable (601) indépendemment de la force de signal du signal de réception.
